# EUROPÄISCHE PATENTSCHRIFT

(11) **EP 0 584 120 B1**
(45) Veröffentlichungstag und Bekanntmachung des Hinweises auf die Patenterteilung: **01.03.1995**
(21) Anmeldenummer: 92909438.1
(22) Anmeldetag: 04.05.1992
(51) Int. Cl.: G01F 1/22

(54) **SCHWEBEKÖRPER-DURCHFLUSSMENGEN-MESSGERÄT**
FLOATER FLOWMETER
DEBITMETRE A CORPS FLOTTANT

(30) Priorität: 13.05.1991 DE 9106040 U
(43) Veröffentlichungstag der Anmeldung: 02.03.1994
(73) Patentinhaber: WITTMANN KUNSTSTOFFGERÄTE Ges.m.b.H., A-1220 Wien (AT)
(72) Erfinder: WITTMANN, Werner, A-1190 Wien (AT)
(74) Vertreter: Voigt, Günter, Dipl.-Ing.
(86) Internationale Anmeldenummer: EP9200965
(87) Internationale Veröffentlichungsnummer: WO9221005

(56) Entgegenhaltungen:
- CH-A- 483 009
- DE-A- 3 312 961
- US-A- 4 245 513

## Beschreibung

Die Erfindung bezieht sich auf ein Schwebekörper-Durchflußmengen-Meßgerät. Aus US-A-4 245 513 ist ein Schwebekörper-Durchflußmengen-Meßgerät mit einem auswechselbaren Meßrohr bekannt, das zwischen einer unteren und einer oberen Durchflußarmatur angeordnet ist. Die beiden Durchflußarmaturen besitzen Aufnahmeöffnungen, in der Form von zylindrischen Ausnehmungen, die mit entsprechenden Außenführungen des Meßrohrs in Verbindung stehen. Weiterhin besitzt die obere Durchflußarmatur eine dichtende Verschlußschraube.

Außerdem ist ein solches Meßgerät grundsätzlich bereits aus der DE-OS 3 417 066 bekannt. Bei diesem bekannten Meßgerät wird das Meßrohr über entsprechende Dichtungen und ein Klemmstück zwischen oberer und unterer Durchflußarmatur gehalten. Der axiale Anpreßdruck auf das Meßrohr wird über ein verschwenkbares Kurvenstück erzeugt, das den axialen Druck über das Klemmstück an das Meßrohr weiterleitet. Damit soll der Austausch der Meßrohre, die durch das hindurchströmende Medium an ihrer Innenwandung verschmutzen, erleichtert werden. Der Anpreßdruck wird dabei über eine Stellschraube des Kurvenstücks justiert. Wie der in der zugehörigen Zeichnungsfigur dargestellte Aufbau dieses bekannten Meßgerätes erkennen läßt, sind relativ viele aufeinander abzustimmende Teile erforderlich. Die Auflage des Meßrohres (an der oberen und unteren Durchflußarmatur) besitzt keine radiale Führung und kann daher nicht als optimal angesehen werden.

Aus dem DE-GM 7 637 539 ist ein entsprechendes Meßgerät bekannt, bei dem je eine Überwurfmutter an den Enden des Meßrohres vorgesehen ist. Mit Hilfe dieser Überwurfmuttern wird das Meßrohr zwischen den Durchflußarmaturen gehalten. Damit ist neben einer axialen Fixierung des Meßrohres auch eine radiale Führung an den Einspannpunkten (an der oberen und der unteren Durchflußarmatur) gegeben. Insbesondere das Einsetzen des Meßrohres mit den übergreifenden Überwurfmuttern zwischen die Durchflußarmaturen erfordert jedoch ein gewisses Geschick.

Schließlich ist auch aus dem DE-GM 8 323 017 ein entspreches Meßgerät bekannt, bei dem das Meßrohr über Bajonettringe mit den Durchflußarmaturen verbunden wird. Damit ist das Auswechseln der Meßrohre zwar grundsätzlich sehr schnell möglich. Das Einsetzen des Meßrohres und seine Befestigung zwischen den Durchflußarmaturen erfordert jedoch auch hier ein gewisses Geschick.

Der Erfindung liegt die Aufgabe zugrunde, ein Meßgerät nach dem Oberbegriff des Anspruchs 1 derart weiterzuentwickeln, daß der Herstellungsaufwand für die am Austausch des Meßrohres beteiligten Teile möglichst gering ist und der Austausch an sich keine größere Geschicklichkeit erfordert.

Die Lösung dieser Aufgabe erfolgt erfindungsgemäß durch die Merkmale des Anspruchs 1.

Vorteilhafte Weiterbildungen ergeben sich aus den Unteransprüchen.

Die Erfindung wird nachfolgend anhand der Zeichnungsfigur beispielsweise erläutert. Es zeigen:

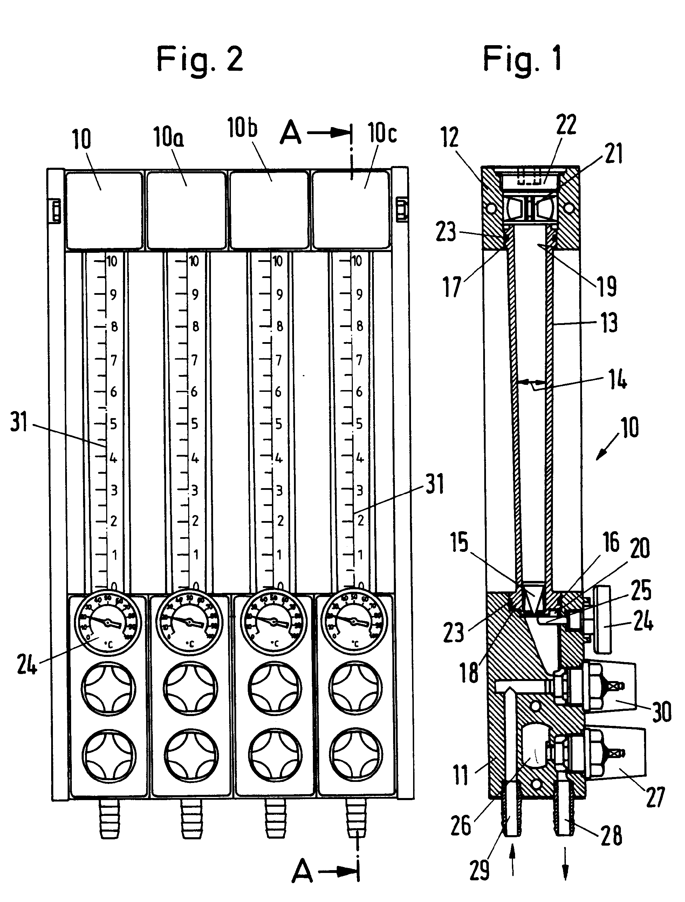

- Fig. 1: ein einzelnes Meßgerät von der Seite im Schnitt und
- Fig. 2: eine Mehrzahl einzelner Meßgeräte, die in Reihe nebeneinander angeordnet sind.

Ein Schwebekörper-Durchflußmengen-Meßgerät wird häufig dazu verwendet, die pro Zeiteinheit durch eine zu kühlende Einrichtung, beispielsweise eine Kunststoff-Spritzgußform, hindurchströmende Menge eines Kühlmediums zu erfassen. Das durchsichtige Meßrohr ist mit einem sich von unten nach oben erweiternden Innendurchmesser versehen. Es ist normalerweise im Rücklauf des Kühlmediums angeordnet und enthält einen Staukegel, der sich bei fehlender Strömung im Meßrohr soweit absenkt, daß er entweder im nach unten verjüngten Innendurchmesser des Meßrohres oder auf einem speziellen Rastsitz aufliegt. Sobald eine Strömung durch das Meßrohr vorhanden ist, wird der Staukegel mit der Strömung nach oben getragen. Dabei vergrößert sich wegen des sich nach oben erweiternden Innendurchmessers des Meßrohres der freie Strömungsquerschnitt zwischen Innenwandung des Meßrohres und Staukegel bis sich ein Gleichgewichstzustand zwischen strömungsbedingten Auftriebskräften und dem Gewicht des Staukegels einstellt. Die Höhe, in der sich dieser Gleichgewichtszustand für den Staukegel einstellt, ist ein Maß für die durchströmende Menge an Kühlmedium je Zeiteinheit. Durch eine entsprechende Eichung kann jeder Höhe des Staukegels eine bestimmte Durchflußmenge pro Zeiteinheit zugeordnet werden.

Da jeder zu kühlenden Kunststoff-Spritzgußform eine Vielzahl von Kühlkreisläufen zugeordnet ist, für die je nach Kühlbedarf eine andere Durchflußmenge pro Zeiteinheit erforderlich ist, wird normalerweise eine Vielzahl solcher oben beschriebener Meßgeräte in Form eines Registers unmittelbar nebeneinander in Reihe angeordnet. Die Zuflüsse und Abflüsse aller Kreisläufe werden dabei über Sammelkanäle zusammengefaßt. Dies geschieht über Querkanäle zwischen den einzelnen Meßgeräten in der oberen Durchflußarmatur für den gemeinsamen Abfluß und durch Querkanäle zwischen den einzelnen Meßgeräten in der unteren Durchflußarmatur für den Zufluß.

Das Meßgerät 10 besteht im wesentlichen aus einer unteren Durchflußarmatur 11 und einer oberen Durchflußarmatur 12. Zwischen den beiden Durchflußarmaturen 11 und 12 befindet sich ein aus Glas oder durchsichtigem Kunststoff bestehendes Meßrohr 13, dessen lichter Innendurchmesser 14 sich von unten nach oben konisch erweitert. Im Meßrohr 13 befindet sich ein Staukegel 15, der bei Fehlen eines Kühlmedium-Durchflusses im unteren Teil des Meßrohres 13 von der sich nach unten verengenden Innenwandung des Meßrohres gehalten wird. Es kann aber auch ein spezieller Rastsitz vorgesehen werden.

In der unteren Durchflußarmatur 11 und in der oberen Durchflußarmatur 12 sind miteinander fluchtende kreiszylindrische Ausnehmungen 16 bzw. 17 vorgesehen, die der Aufnahme der Außenführungen 18 bzw. 19 des Meßrohres 13 dienen. Die Außenführungen 18 und 19 des Meßrohres 13 tragen Dichtringe 23, die trotz voller Dichtwirkung eine gewisse Längsbeweglichkeit des Meßrohres 13 in unterer 11 und oberer Durchflußarmatur 12 gestatten. Die Außenführung 18 des Meßrohres 13 in dessen unterem Teil kann sich bis zu einem axialen Anschlag 20 der unteren Durchflußarmatur 11 bewegen.

In der oberen Durchflußarmatur 12 ist oberhalb des Meßrohres 13 ein Verteilerkopf 21 mit sowohl axialen als auch radialen Kanälen angeordnet, die miteinander in Verbindung stehen. Das aus dem Meßrohr 13 kommende Kühlmedium gelangt über die axialen und radialen Kanäle sowie Querkanäle zwischen den einzelnen Meßgeräten 10, 10a, 10b und 10c in die gemeinsame Sammelleitung aller Meßgeräte für den Abfluß.

Über eine dichtend oberhalb des Verteilerkopfes 21 angeordnete Verschlußschraube 22 werden der Verteilerkopf 21 und das Meßrohr 13 axial in ihrer axialen Längsbeweglichkeit beschränkt.

Die bereits weiter oben erwähnten Außenführungen 18 und 19 des Meßrohres 13 tragen Dichtringe 23, vorzugsweise sogenannte O-Ringe.

Beim Einschrauben der Verschlußschraube 22 in die obere Durchflußarmatur 12 dient der Verteilerkopf 21 gleichzeitig als vermittelndes Element zwischen Verschlußschraube 22 und Meßrohr 13.

In vielen Fällen ist es erwünscht, die Temperatur des zurückfließenden Kühlmediums zu erfassen. Für solche Fälle kann ein Thermometer 24 an der unteren Durchflußarmatur 11 vorgesehen werden, dessen Temperaturfühler 25 knapp unterhalb des Meßrohres 13 in den zurückfließenden Strom des Kühlmediums hineinragt.

Der Weg des Kühlmediums ist wie folgt: Aus einem gemeinsamen Sammelkanal 26 für den Vorlauf gelangt das Kühlmedium über ein Regulierventil 27 in eine Vorlaufleitung 28, die zur zu kühlenden Einrichtung - beispielsweise zur Kunststoff-Spritzgußform - führt. Von dort kommt das Kühlmedium über eine Rücklaufleitung 29 zurück und wird über ein weiteres Regulierventil 30 am Temperturfühler 25 des Thermometers 24 vorbei zum Meßrohr 13 geführt, in dem es nach oben strömt und dabei den Staukegel 15 je nach Durchflußmenge pro Zeiteinheit um ein bestimmtes Maß nach oben trägt, bis ein Gleichgewichtszustand zwischen dem Gewicht des Staukegels 13 einerseits und den strömungsbedingten Auftriebskräften andererseits gegeben ist. Je größer die Durchflußmenge des Kühlmediums ist umso weiter wird der Staukegel 13 nach oben getragen. Durch Eichung kann jeder Höhe des Staukegels 13 eine bestimmte Durchflußmenge zugeordnet und diese mit Hilfe einer Skala 31 direkt abgelesen werden.

Bei dem von Zeit zu Zeit erforderlichen Reinigen bzw. Austauschen des Meßrohres 13 ist bei dem oben beschriebenen Meßgerät 10 nur noch die Verschlußschraube 22 zu lösen, und das Meßrohr 13 nach oben aus der oberen Durchflußarmatur 12 herauszuführen. Nach der Reinigung bzw. dem Austausch des Meßrohres 13 sowie ggfs. der Dichtringe 23 an den Außenführungen 18, 19 des Meßrohres 13 werden Meßrohr 13 und Verteilerkopf 21 wieder von oben in die obere Durchflußarmatur 12 eingeführt. Das Meßrohr ist dann zwischen dem axialen Anschlag 20 und der Verschlußschraube 22 bzw. dem Verteilerkopf 21 in Längsrichtung (axial) "schwimmend gelagert".

Alle übrigen - hier nicht im einzelnen beschriebenen - Teile des Meßgerätes 10 werden in an sich bekannter Weise ausgeführt.

Die besonderen Vorteile des oben beschriebenen Meßgerätes 10 sind die relativ einfache Anordnung des Meßrohres 13 in zwei miteinander fluchtenden kreiszylindrischen Ausnehmungen 16,17, sowie die leichte und weitgehend ungehinderte Zugänglichkeit des Meßrohres 13 bei der Reinigung oder beim Austausch, wodurch ein besonderes Geschick beim Austausch des Meßrohres nicht mehr erforderlich ist.

## Patentansprüche

1. Schwebekörper-Durchflußmengen-Meßgerät mit einem auswechselbaren Meßrohr, das zwischen einer unteren und einer oberen Durchflußarmatur angeordnet ist, wobei es sich bei den Aufnahmeöffnungen für das Meßrohr (13) in der oberen (12) und der unteren Durchflußarmatur (11) um miteinander fluchtende kreiszylindrische Ausnehmungen (16,17) handelt, wobei das Meßrohr (13) Außenführungen (18, 19) aufweist, die einen leichten Paßsitz in Bezug auf die vorerwähnten Ausnehmungen (16, 17) derart aufweisen, daß das Meßrohr in Längsrichtung innerhalb vorgegebener Grenzen axial beweglich angeordnet ist und wobei unmittelbar oberhalb des Meßrohres (13) in der oberen Durchflußarmatur (12) ein Verteilerkopf (21) mit miteinander kommunizierenden axialen und radialen Kanälen sowie eine dichtende Verschlußschraube (22) neben einem axialen Anschlag (20) in der unteren Durchflußarmatur (11) der axialen Bewegungsbegrenzung für das Meßrohr (13) nach oben bzw. nach unten dienen.

2. Meßgerät nach Anspruch 1, dadurch gekennzeichnet, daß in den Außenführungen (18, 19) des Meßrohres (3) Dichtringe (23) angeordnet sind.

3. Meßgerät nach Anspruche 2, dadurch gekennzeichnet, daß es sich bei den Dichtringen um O-Ringe handelt.

## Claims

1. Float element throughflow quantity measuring instrument with an exchangeable measuring tube which is arranged between a lower and an upper throughflow valve, wherein the receiving openings for the measuring pipe (13) in the upper (12) and the lower throughflow valve (11) are mutually aligned circularly cylindrical recesses (16, 17), wherein the measuring tube (13) has external guides (18, 19), which have a light fitting seat with respect to the aforesaid recesses (16, 17) in such a manner that the measuring tube is arranged to be axially movable in longitudinal direction within preset limits and wherein a distributor head (21), which is directly above the measuring tube (13) and in the upper throughflow valve (12), with mutually communicating axial and radial channels as well as a sealing closure screw (22) serve, in addition to an axial abutment (20) in the lower througflow valve (11), for the axial movement limitation for the measuring tube (13) upwardly and downwardly.

2. Measuring instrument according to claim 1, characterised thereby that sealing rings (23) are arranged in the outer guides (18, 19) of the measuring tube (3).

3. Measuring instrument according to claim 2, characterised thereby O-rings are concerned in the case of the sealing rings.

## Revendications

1. Débitmètre à corps flottant comprenant un tube de mesure interchangeable qui est disposé entre une armature de passage inférieure et une armature de passage supérieure, dans lequel les ouvertures qui reçoivent le tube de mesure (13) dans l'armature de passage supérieure (12) et dans l'armature de passage inférieure (11) sont constituées par des évidements en cylindres de révolution (16, 17) qui sont alignés l'un sur l'autre, dans lequel le tube de mesure (13) comporte des guidages extérieurs (18, 19) qui présentent un ajustement à frottement doux par rapport aux évidements précités (16, 17), d'une manière telle que le tube de mesure soit disposé en étant mobile axialement dans la direction longitudinale à l'intérieur de limites prédéterminées, et dans lequel la limitation des déplacements du tube de mesure (13) dans le sens axial vers le haut et vers le bas, respectivement, est assurée par une tête de répartition (21) qui est disposée immédiatement au-dessus du tube de mesure (13) dans l'armature de passage supérieure (12) et qui est pourvue de canaux axiaux et radiaux communiquant entre eux, ainsi que par une vis de fermeture étanche (22), en plus d'une butée axiale (20) qui est située dans l'armature de passage inférieure (11).

2. Débitmètre selon la revendication 1, caractérisé par le fait que des joints d'étanchéité (23) sont disposés dans les guidages extérieurs (18, 19) du tube de mesure (13).

3. Débitmètre selon la revendication 2, caractérisé par le fait que les joints d'étanchéité sont constitués par des joints toriques.
